# FASCICULE DE BREVET EUROPEEN

(11) **EP 1 755 863 B1**
(45) Date de publication et mention de la délivrance du brevet: **13.08.2008**
(21) Numéro de dépôt: 05777326.9
(22) Date de dépôt: 09.06.2005
(51) Int. Cl.: B29C 49/58, B29C 33/30

(54) **MOULE POUR LA FABRICATION DE RECIPIENTS EN MATERIAU THERMOPLASTIQUE PAR SOUFFLAGE OU ETIRAGE- SOUFFLAGE A L'AIDE D'UNE TUYERE-CLOCHE ET INSTALLATION INCORPORANT UN TEL MOULE**
BLASFORMWERKZEUG ZUR HERSTELLUNG VON KUNSTSTOFFBEHÄLTERN DURCH BLASFORMEN ODER STRECKBLASFORMEN UNTER VERWENDUNG EINES GLOCKENFÖRMIGEN BLASDORNS UND DAZUGEHÖRENDE ANLAGE
MOULD FOR PRODUCING THERMOPLASTIC CONTAINERS BY BLOW MOULDING OR STRETCH BLOW MOULDING USING A BELL SHAPED BLOWING MEANS AND PLANT THEREFOR

(30) Priorité: 16.06.2004 FR 0406531
(43) Date de publication de la demande: 28.02.2007
(73) Titulaire: SIDEL PARTICIPATIONS, 76930 Octeville-sur-Mer (FR)
(72) Inventeur: DANNEBEY, Laurent, F-76930 Octeville-sur-Mer (FR)
(74) Mandataire: Gorrée, Jean-Michel
(86) Numéro de dépôt international: PCT/FR2005/001433
(87) Numéro de publication internationale: WO 2006/003310

(56) Documents cités:
- FR-A- 2 790 704
- FR-A- 2 833 512
- US-B1- 6 464 486

## Description

La présente invention concerne, d'une façon générale, le domaine de la fabrication de récipients (et notamment de bouteilles) en matériau thermoplastique tel que le PET par soufflage ou étirage-soufflage d'une ébauche dans un moule de soufflage.

Plus précisément, l'invention concerne des perfectionnements apportés aux moules agencés pour la fabrication de récipients en matériau thermoplastique, notamment en PET, par soufflage ou étirage-soufflage d'une ébauche, par exemple constituée par une préforme, lesdits moules ayant une face qui est munie d'une ouverture communiquant avec une cavité de moulage et qui est munie d'une plaque d'appui définissant ladite ouverture et appropriée pour recevoir en appui l'extrémité frontale d'une tuyère de soufflage en forme de cloche dite "tuyère-cloche".

L'invention concerne également des perfectionnements apportés aux installations de soufflage ou d'étirage-soufflage pour la fabrication de récipients à partir d'ébauches, par exemple constituées par des préformes, en polymère thermoplastique, notamment en PET, cette installation comportant une tuyère de soufflage du type tuyère-cloche pour le soufflage d'un fluide sous pression à l'intérieur d'une ébauche disposée dans une cavité de moulage d'un moule, ladite tuyère ayant son extrémité conformée en cloche qui est propre, lors du soufflage, à être mise en appui frontal étanche contre une plaque d'appui prévue dans une paroi du moule en coiffant le col de l'ébauche qui émerge hors de ladite paroi sur laquelle elle est en appui par une collerette annulaire tandis que son corps est engagé dans ladite cavité de moulage.

La plaque d'appui précitée est une pièce d'usure amovible qui est destinée à être remplacée lorsqu'elle a été usée à la suite de contacts répétés avec l'extrémité frontale de la tuyère de soufflage et elle évite que ce soit la face du moule elle-même qui soit usée, avec les inconvénients que cela entraînerait.

Dans les installations connues du genre visé par l'invention (voir par exemple les documents FR 2 764 544 figures 1, 3, 4 et 6; FR 2 828 829 figure 1; FR 2 833 512 figures 8 à 10; FR 2 841 495 figures 2A-2C et 3; FR 2 843 714 figures 1 et 3), il est connu d'agencer la plaque d'appui non seulement pour qu'elle reçoive l'extrémité frontale de la tuyère, mais aussi pour qu'elle définisse l'ouverture de réception du col de l'ébauche à souffler et qu'elle supporte ladite ébauche par sa collerette. Un tel agencement avait été considéré comme souhaitable pour faciliter la personnalisation de l'installation en vue de la fabrication de récipients de même volume, mais avec des cols de diamètres différents : dans ce cas, il suffisait de changer les plaques d'appui. De ce fait, la plaque d'appui de ces installations connues est une pièce métallique de dimensions relativement importantes et qui est donc coûteuse. Or, l'usure de cette plaque d'appui au contact de la tuyère de soufflage intervient relativement rapidement : elle doit donc être remplacée relativement souvent et il en résulte une dépense non négligeable pour ce poste d'entretien, tandis que le remplacement des plaques d'appui aux fins de personnalisation de l'installation intervient moins souvent que ce qui avait été escompté à l'origine.

L'invention a essentiellement pour objet de remédier à cet inconvénient et de proposer une solution perfectionnée qui donne mieux satisfaction aux utilisateurs sans entraîner de frais supplémentaires sensibles au cours de la fabrication des moules.

A cette fin, selon un premier de ses aspects l'invention propose un moule tel que mentionné au préambule qui, étant agencé conformément à l'invention, se caractérise en ce que la plaque d'appui est conformée en bague présentant un contour de même forme que celle du contour de l'extrémité de la tuyère, ladite bague étant engagée dans une gouttière qui est creusée dans ladite face du moule et qui entoure à distance l'ouverture.

Un moule agencé selon l'invention se présente donc avec une ouverture de col définie directement dans une face de moule, tandis que cette ouverture est entourée à distance par une gouttière dans laquelle est encastrée ladite bague.

Grâce à cet agencement, on réduit la plaque d'appui à sa seule portion géométrique qui est utile pour éviter l'usure du moule lui-même au contact de la face frontale de la tuyère de soufflage : cette conformation en bague de la plaque d'appui conduit à une pièce de dimensions réduites qui est beaucoup moins coûteuse que la grande plaque d'appui utilisée jusqu'à présent.

Quant au support de l'ébauche, l'ouverture de réception du col est désormais définie dans le moule lui-même et l'ébauche repose par sa collerette sur la partie du moule définissant le bord de cette ouverture. Si l'utilisateur souhaite traiter des ébauches ayant un col de plus grand diamètre, il est certes amené désormais à reprendre par usinage l'ouverture pour l'agrandir ; mais il s'agit là d'un inconvénient de relativement faible incidence, car en pratique les changements de diamètre de col pour une cavité de moulage conservant les mêmes dimensions sont relativement rares et peuvent être assumés en regard de l'économie entraînée par l'équipement en bagues d'appui, économie qui s'étend sur toute la durée de vie du moule.

L'extrémité de la tuyère étant de façon courante circulaire, la bague est de préférence annulaire et la gouttière de réception est annulaire et concentrique à l'ouverture de passage du col de l'ébauche.

Dans la pratique courante, le moule comprend au moins deux demi-moules écartables l'un de l'autre. Dans ce contexte, on prévoit que chaque demi-moule est pourvu d'un tronçon de gouttière semi-annulaire propre à recevoir une demi-bague semi-annulaire respective. Une telle disposition trouve application notamment dans le cas actuellement très courant où le moule comprend deux demi-moules écartables mutuellement, ce qui est par exemple le cas des moules portefeuilles, qui sont utilisés par la Demanderesse et dont l'écartement mutuel est obtenu par rotation autour d'un axe d'articulation.

Compte tenu des efforts importants que doit supporter la bague d'appui, la bague est de préférence métallique, par exemple typiquement en acier ou en bronze spécial. Néanmoins, l'emploi de bagues en matière plastique ou en matière synthétique est également envisageable.

Selon un second de ses aspects, l'invention propose une installation telle que mentionnée au préambule qui, étant agencée conformément à l'invention, se caractérise en ce que le moule est agencé comme exposé ci-dessus.

L'invention sera mieux comprise à la lecture de la description qui suit de certains modes de réalisation préférés donnés uniquement à titre d'exemples nullement limitatifs. Dans cette description, on se réfère aux dessins annexés sur lesquels :
- la figure 1 est une vue très schématique d'une installation d'étirage-soufflage agencée conformément à l'invention,
- la figure 2 est une vue de côté, en coupe selon la ligne II-II de la figure 3 et à plus grande échelle, de la seule partie supérieure d'un moule agencé conformément à l'invention, et
- la figure 3 est une demi-vue de dessus d'un moule mettant en oeuvre les dispositions de la figure 2.

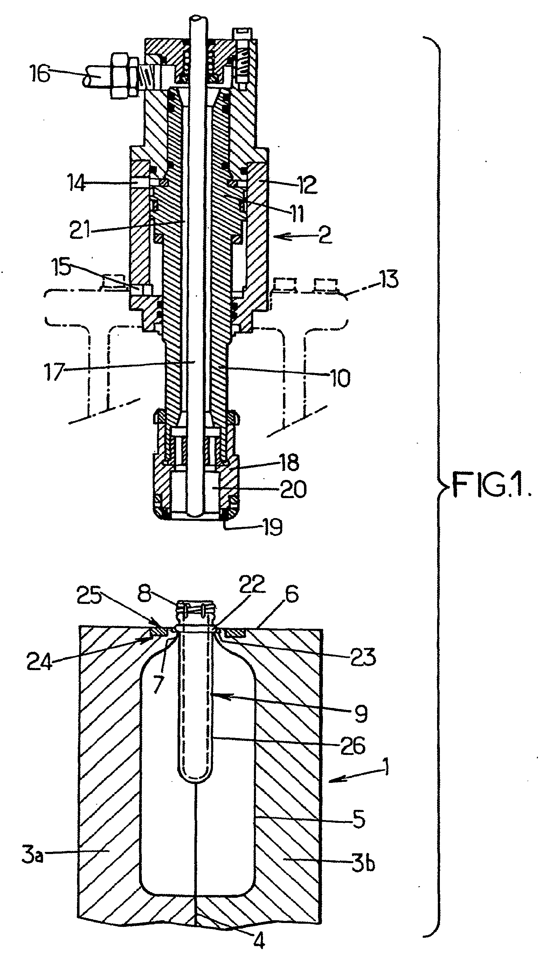

La figure 1 illustre très schématiquement une installation de moulage par étirage-soufflage à l'aide d'une tuyère du type tuyère-cloche, telle qu'elle apparaît dans sa conception générale dans le document FR 2 764 544, auquel on se reportera pour tous les détails de conception et de fonctionnement. Seuls seront exposés dans ce qui suit les détails nécessaires à la compréhension de la présente invention. On soulignera que l'installation illustrée à la figure 1 constitue un tout structurel et fonctionnel, mais qu'en pratique une unité de fabrication comporte une multiplicité de telles installations regroupées sur un bâti tournant du type carrousel de manière qu'un grand nombre de récipients puissent être produits en ligne.

L'installation de la figure 1 comprend un moule 1 et, associé à celui-ci, un dispositif d'étirage-soufflage 2.

Le moule 1 comprend principalement deux demi-moules 3a et 3b (ainsi éventuellement qu'un fond mobile, non montré) qui sont mobiles l'un par rapport à l'autre pour pouvoir être ouverts ou fermés sous l'action de moyens d'entraînement non montrés. La référence 4 désigne le plan de joint des deux demi-moules. Les demi-moules sont évidés intérieurement de manière à définir, dans leur position de fermeture, une cavité 5 de moulage ou tout au moins une grande partie de la cavité 5 de moulage, lorsqu'un fond, mobile, de moule est présent.

La face 6 supérieure du moule est agencée pour définir une ouverture 7 communiquant avec la cavité 5 et à travers laquelle est engagé le col 8 d'une ébauche 9 (ici une préforme) à traiter. Cette partie, qui est plus particulièrement concernée par les perfectionnements conformes à l'invention, sera décrite plus loin de façon plus détaillée.

Le dispositif d'étirage-soufflage 2 comprend principalement un tube 10 en partie agencé sous forme d'un piston 11 engagé à coulissement étanche dans une portion formant cylindre 12 qui est supportée de façon fixe sur un bâti 13, lequel supporte également le moule 1 par l'intermédiaire de moyens non montrés. La partie formant cylindre 12 est munie d'orifices 14, 15 pour l'admission sélective d'un fluide de commande de manière à commander le déplacement du tube 10 vers le haut ou vers le bas.

L'extrémité supérieure du tube 10 est fermée et raccordée en 16 à une source de fluide de soufflage sous haute pression (typiquement 40 x 10⁵ Pa). Le fluide de soufflage circule dans l'espace annulaire 21 défini entre le tube 10 et une tige d'étirage 17 s'étendant coaxialement à l'intérieur du tube.

La tige d'étirage 17 est déplaçable vers le haut ou vers le bas de façon sélective en relation avec le processus de soufflage.

L'extrémité inférieure du tube 10 est agencée de façon élargie de manière à former une sorte de cloche, constituant la tuyère 18 de soufflage à proprement parler, dont le volume intérieur 20 est suffisant pour qu'elle puisse abriter le col 8 de l'ébauche en position de soufflage. Autrement dit notamment, la dimension (notamment le diamètre) intérieure de la tuyère 18 est supérieure au diamètre externe du col 8 de l'ébauche 9. L'extrémité frontale de la tuyère 18 est équipée d'un joint d'étanchéité 19.

Conformément à l'invention, l'ébauche 9 repose, par la collerette 22 prévue à la base de son col 8, directement sur la face 6 supérieure du moule, par exemple sur le fond d'un lamage 23 prévu dans cette face 6, comme montré à la figure 1, le corps 26 de l'ébauche étant engagé dans la cavité 5.

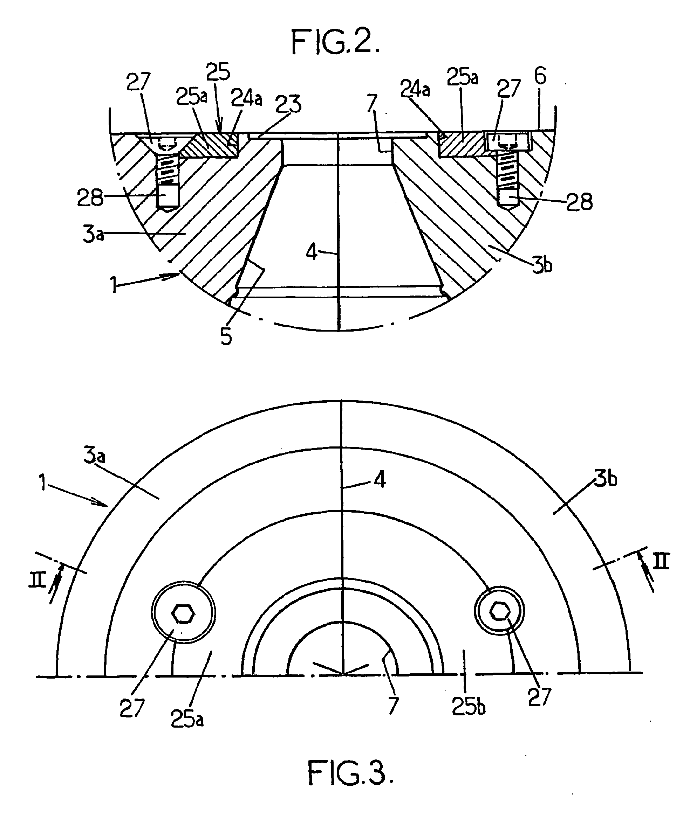

Comme on le voit également mieux sur la figure 2 à plus grande échelle (sur laquelle la forme de la cavité 5 diffère sensiblement de celle de la cavité dessinée à la figure 1), autour du lamage 23 et sans relation structurelle avec celui-ci est prévue une gorge ou gouttière 24 s'étendant sur un contour fermé et dans laquelle est encastrée une bague 25 d'appui qui présente un contour de même forme que celui de l'extrémité frontale de la tuyère 18. Autrement dit, la gouttière 24 s'étend autour de l'ouverture 7 de passage du col de l'ébauche et à distance de celle-ci.

En général, l'extrémité de la tuyère est circulaire et dans ce cas la bague 25 est annulaire ; alors la gouttière 24 de réception est annulaire et concentrique à l'ouverture 7 de passage du col de l'ébauche.

De préférence, comme représenté aux figures 1 et 2, la bague 25 est totalement encastrée dans la gouttière 24, sa face supérieure affleurant la face 6 du moule.

La bague 25 est en général métallique, notamment par exemple en acier ou en bronze spécial, de manière à être mécaniquement résistante. Toutefois, elle peut être en matière plastique ou en toute autre matière synthétique choisie de façon à présenter les propriétés mécaniques requises.

Les demi-moules 3a, 3b étant écartables l'un de l'autre, comme exposé plus haut, ils sont pourvus respectivement de tronçons de gouttière semi-annulaire 24a, 24b propres à recevoir une demi-bague 25a, 25b respective, comme visible aux figures 1 et 2 dont le plan de coupe est sensiblement transversal au plan de joint 4 des deux demi-moules.

De préférence, des moyens de blocage sont prévus pour maintenir la bague 25 ou chaque demi-bague 25a, 25b dans la gouttière 24 ou respectivement dans chaque tronçon de gouttière semi-annulaire 24a, 24b. Comme illustré aux figures 2 et 3, ces moyens de blocage peuvent être des boulons ou vis 27 vissés dans des alésages taraudés 28. Les têtes de ces boulons ou vis sont noyées dans des logements respectifs de manière à ne pas saillir au-dessus de la face 6.

Ainsi, la bague 25, respectivement chaque demi-bague 25a, 25b est une pièce d'usure facile à remplacer et plus petite que les plaques de col utilisées jusqu'à présent. Nécessitant moins de matière, la bague 25 respectivement chaque demi-bague 25a, 25b est sensiblement moins coûteuse que la plaque de col respectivement chaque demi- plaque de col actuelle. Une modification du diamètre du col des ébauches et des récipients à fabriquer est obtenue par une reprise d'usinage du passage 7 du moule.

## Revendications

1. Moule pour la fabrication de récipients en matériau thermoplastique par soufflage ou étirage-soufflage d'une ébauche, ledit moule (1) ayant une face (6) qui est munie d'une ouverture (7) communiquant avec une cavité (5) de moulage et qui est munie d'une plaque d'appui définissant ladite ouverture (7) et appropriée pour recevoir en appui l'extrémité frontale d'une tuyère-cloche de soufflage,
**caractérisé en ce que** la plaque d'appui est conformée en bague (25) présentant un contour de même forme que celle du contour de l'extrémité de la tuyère (18), ladite bague (25) étant engagée dans une gouttière (24) qui est creusée dans ladite face (6) du moule (1) et qui entoure à distance ladite ouverture (7).

2. Moule selon la revendication 1, **caractérisé en ce que** la bague (25) est annulaire et **en ce que** la gouttière (24) de réception est annulaire et concentrique à l'ouverture (7) de passage du col (8) de l'ébauche (9).

3. Moule selon la revendication 1 ou 2,
**caractérisé en ce qu'**il comprend au moins deux demi-moules (3a, 3b) écartables l'un de l'autre et **en ce que** chaque demi-moule (3a, 3b) est pourvu d'un tronçon de gouttière (24a, 24b) semi-annulaire propre à recevoir une demi-bague semi-annulaire (25a, 25b) respective.

4. Moule selon la revendication 3, **caractérisé en ce qu'**il comprend deux demi-moules (3a, 3b) écartables mutuellement.

5. Moule selon l'une quelconque des revendications 1 à 4, **caractérisé en ce que** la bague (25) est métallique.

6. Moule selon l'une quelconque des revendications 1 à 4, **caractérisé en ce que** la bague (25) est en matière plastique.

7. Moule selon l'une quelconque des revendications 1 à 4, **caractérisé en ce que** la bague (25) est en matière synthétique.

8. Installation de soufflage ou d'étirage-soufflage pour la fabrication de récipients à partir d'ébauches en polymère thermoplastique, cette installation comportant une tuyère (18) de soufflage du type tuyère-cloche pour le soufflage d'un fluide sous pression à l'intérieur d'une ébauche (9) disposée dans une cavité (5) de moulage d'un moule (1), ladite tuyère (18) ayant son extrémité conformée en cloche qui est propre, lors du soufflage, à être mise en appui frontal étanche contre une plaque d'appui prévue dans une face (6) du moule (1) en coiffant le col (8) de l'ébauche (9) qui émerge hors de ladite face (6) sur laquelle elle est en appui par une collerette annulaire (22) tandis que son corps (26) est engagé dans ladite cavité (5) de moulage,
**caractérisée en ce que** le moule est agencé selon l'une quelconque des revendications 1 à 7.

9. Installation selon la revendication 8,
**caractérisée en ce que** l'extrémité de la tuyère (18) est circulaire et la bague (25) est annulaire.

## Claims

1. A mold for the manufacture of containers made from thermoplastic material by blow-molding or stretch-blow-molding a blank, said mold (1) having a surface (6) which is provided with an opening (7) communicating with a molding cavity (5) and which is provided with a support plate defining said opening (7) and suitable for supporting the front end of a blowing bell nozzle,
**characterized in that** the support plate is shaped as a ring (25) having an outline of similar shape to that of the outline of the end of the nozzle (18), said ring (25) being engaged in a gutter (24) which is hollowed out in said surface (6) of the mold (1) and which surrounds, spaced apart, said opening (7).

2. The mold as claimed in claim 1, **characterized in that** the ring (25) is annular and **in that** the receiving gutter (24) is annular and concentric with the opening (7) through which the neck (8) of the blank (9) passes.

3. The mold as claimed in claim 1 or 2, **characterized in that** it comprises at least two half-molds (3a, 3b) which may be spaced from one another and **in that** each half-mold (3a, 3b) is provided with a semi-annular gutter section (24a, 24b) adapted to receive one respective semi-annular half-ring (25a, 25b).

4. The mold as claimed in claim 3, **characterized in that** it comprises two half-molds (3a, 3b) which may be mutually separated.

5. The mold as claimed in any one of claims 1 to 4,
**characterized in that** the ring (25) is metallic.

6. The mold as claimed in any one of claims 1 to 4,
**characterized in that** the ring (25) is made of plastic.

7. The mold as claimed in any one of claims 1 to 4,
**characterized in that** the ring (25) is made of synthetic material.

8. A blow-molding or stretch-blow-molding installation for the manufacture of containers from blanks made of thermoplastic polymer, this installation comprising a blowing nozzle (18) of the bell-nozzle type for blowing a pressurized fluid into a blank (9) arranged in a molding cavity (5) of a mold (1), said nozzle (18) having a bell-shaped end which is suitable, during blow-molding, for being sealingly supported in front against a support plate provided in one face (6) of the mold (1) while capping the neck (8) of the blank (9) which merges from said face (6) on which it rests by an annular flange (22) whilst its body (26) is engaged in said molding cavity (5),
**characterized in that** the mold is arranged according to any one of claims 1 to 7.

9. The installation as claimed in claim 8, **characterized in that** the end of the nozzle (18) is circular and the ring (25) is annular.

## Patentansprüche

1. Form zur Herstellung von Behältern aus thermoplastischem Material durch Blasen oder Streckblasen eines Rohlings, wobei die Form (1) eine Vorderseite (6) aufweist, die mit einer Öffnung (7) versehen ist, welche mit einem Formungshohlraum (5) in Verbindung steht und welche mit einer Auflageplatte versehen ist, die diese Öffnung (7) definiert und derart ausgeführt ist, um aufliegend das vordere Ende einer Blas-Düsenglocke aufzunehmen,
**dadurch gekennzeichnet, dass** die Auflageplatte als Ring (25) ausgebildet ist, der einen Umriss mit derselben Form wie der Umriss des Endes der Düse (18) aufweist, wobei der Ring (25) mit einer Rinne (24) in Eingriff steht, die in die Vorderseite (6) der Form (1) gehöhlt ist und die mit Abstand die Öffnung (7) umgibt.

2. Form nach Anspruch 1, **dadurch gekennzeichnet, dass** der Ring (25) ringförmig ist und dass die Aufnahmerinne (24) ringförmig und konzentrisch zur Öffnung (7) des Durchgangs des Halses (8) des Rohlings (9) ist.

3. Form nach Anspruch 1 oder 2, **dadurch gekennzeichnet, dass** sie mindestens zwei Halbformen (3a, 3b) umfasst, die voneinander entfernt werden können, und dass jede Halbform (3a, 3b) mit einem halbringförmigen Rinnenteilstück (24a, 24b) versehen ist, das jeweils einen halbringförmigen Halbring (25a, 25b) aufnehmen kann.

4. Form nach Anspruch 3, **dadurch gekennzeichnet, dass** sie zwei gegenseitig voneinander entfernbare Halbformen (3a, 3b) umfasst.

5. Form nach einem der Ansprüche 1 bis 4, **dadurch gekennzeichnet, dass** der Ring (25) metallisch ist.

6. Form nach einem der Ansprüche 1 bis 4, **dadurch gekennzeichnet, dass** der Ring (25) aus einem Kunststoffmaterial ist.

7. Form nach einem der Ansprüche 1 bis 4, **dadurch gekennzeichnet, dass** der Ring (25) aus einem synthetischen Material ist.

8. Blas- oder Streckblaseinrichtung zur Herstellung von Behältern aus thermoplastischen Polymerrohlingen, wobei diese Einrichtung eine Blasdüse (18) der Art Düsenglocke zum Blasen eines Fluids unter Druck im Inneren eines Rohlings (9), der in einem Formungshohlraum (5) einer Form (1) angeordnet ist, umfasst, wobei das Ende der Düse (18) als Glocke ausgebildet ist, die während des Blasens vorne auf eine Auflageplatte aufgelegt werden kann, die mit einer Vorderseite (6) der Form (1) versehen ist, indem der Hals (8) des Rohlings (9), der aus der Vorderseite (6) hervortritt, auf der er aufliegt, durch einen kreisförmigen Sattel (22) aufgesetzt wird, wenn sein Körper (26) mit dem Formungshohlraum (5) in Eingriff kommt,
**dadurch gekennzeichnet, dass** die Form nach einem der Ansprüche 1 bis 7 angeordnet ist.

9. Einrichtung nach Anspruch 8, **dadurch gekennzeichnet, dass** das Ende der Düse (18) kreisförmig ist und der Ring (25) ringförmig ist.
